# EUROPEAN PATENT APPLICATION

(11) **EP 2 014 632 A1**
(43) Date of publication of application: **14.01.2009**
(21) Application number: 07742631.0
(22) Date of filing: 27.04.2007
(51) Int. Cl.: C06D 5/00, B60R 21/34, B60R 22/46, C06B 23/00, C06B 23/02, C06B 25/34, C06B 29/00, C06B 31/00, C06B 43/00, C06D 5/06

(54) **GAS GENERANT COMPOSITION FOR GAS ACTUATOR FOR ACTIVATING SAFETY DEVICE AND GAS GENERATOR FOR GAS ACTUATOR USING THE SAME**

(30) Priority: 02.05.2006 JP 2006128539
(71) Applicant: NIPPON KAYAKU KABUSHIKI KAISHA, Tokyo 102-8172 (JP); TODA KOGYO CORPORATION, Hiroshima-shi, Hiroshima 732-0824 (JP)
(72) Inventor: KODAMA, Ryoi, Himeji-shi Hyogo 679-2123 (JP); HORIISHI, Nanao, Tokyo 105-6123 (JP)
(74) Representative: TBK-Patent
(86) International application number: PCT/JP2007/059196
(87) International publication number: WO 2007/129611

(57) **Abstract**

Disclosed is a gas generant composition for a gas actuator used for activating a safety device, which contains (A) a nitrogen-containing organic compound, (B) a metal nitrate and/or a perchlorate, (C) a water-soluble polymer binder, and (D) a magnetic material. When compared with the conventional gas generant compositions, this gas generant composition is excellent in combustibility under low pressure conditions and reduced in CO gas generation during combustion. In this gas generant composition, (D) the magnetic material is preferably composed of a magnetic iron oxide. It is also preferable that (A) the nitrogen-containing organic compound is composed of one or more substances selected from nitroguanidine, guanidine nitrate, bitetrazole, azobistetrazole and 5-aminotetrazole; (B) the metal nitrate is composed of a metal salt selected from alkali metals and alkaline earth metals, while the perchlorate is composed of ammonium perchlorate or potassium perchlorate; (C) the water-soluble polymer binder is composed of a mixture of hydroxypropyl methylcellulose (HPMC) and a polyacrylamide; and (D) the magnetic iron oxide has a spinel crystal structure.

## Description

### TECHNICAL FIELD

The present invention relates to a gas generant composition for generating working gas and a gas generator for a gas actuator using the same in a gas generator for a gas actuator loaded on an automobile or an aircraft and employed for human body protection.

### BACKGROUND ART

In general, a seat belt device and an air bag device are widespread in view of protection of the passenger of an automobile. In these, the seat belt device is equipped for the purpose of preventing the passenger from being thrown out into the automobile or from the automobile due to a shock caused upon vehicle collision, and restricts/fixes the passenger to the seat by winding the belt on the body of the passenger.

In recent years, a seat belt device comprising a pretensioner function for improving the passenger protection function has rapidly come into wide use. Also as to the pretensioner device, the number of use thereof tends to increase not only on the driving seat but also on the passenger seat and the back seat, due to the recent improvement of safety consciousness. This pretensioner function immediately tensions the seat belt loosened due to the thickness of clothes or the like upon collision or immediately before the collision, and improves the effect of restricting the passenger. This pretensioner function is implemented by instantaneously moving a piston in a cylinder, for example, by combustion gas of a gas generant output from a small gas generator for a gas actuator referred to as a micro gas generator and strongly drawing the seat belt by power supplied to the pretensioner in association with this piston. In addition, a device such as a hood lifter for reducing the degree of harm on a pedestrian is also currently being loaded on a vehicle in order to absorb a shock on the pedestrian upon collision between the vehicle and the pedestrian in view of pedestrian protection, and a small gas generator is employed for activating this device.

As a gas generant employed for such a pretensioner device, a propellant gas generant based on nitrocellulose is known in general (refer to Japanese Patent Laying-Open No. 49-50619 (Patent Document 1), for example). This gas generant based on nitrocellulose has high gas generation efficiency, and is excellent in moisture absorption resistance.

Japanese Patent Laying-Open No. 2001-2488 (Patent Document 2) discloses a non-propellant gas generant for a pretensioner device. In addition, Japanese Patent Laying-Open No. 2002-12492 (Patent Document 3) also discloses a non-propellant gas generant for a pretensioner device, containing nitrocellulose.
Patent Document 1: Japanese Patent Laying-Open No. 49-50619
Patent Document 2: Japanese Patent Laying-Open No. 2001-2488
Patent Document 3: Japanese Patent Laying-Open No. 2002-12492

### DISCLOSURE OF THE INVENTION

### PROBLEMS TO BE SOLVED BY THE INVENTION

In the gas generant based on nitrocellulose described in Patent Document 1, however, slight contamination with CO gas is unavoidable in the generated gas, and hence a gas generant generating a slighter amount of CO gas is demanded. This also applies to the gas generant disclosed in Patent Document 3.

The gas generant according to Patent Document 2 has a slow combustion speed due to employment of a binder containing a large number of carbon atoms, the content of an inorganic oxidizer for completely combusting the binder increases, there is a possibility that the amount of generated gas decreases as compared with the propellant based on nitrocellulose as a result, and the quantity of the gas generant must be increased in order to exert equivalent performance. Further, this gas generant uses a sodium salt such as sodium nitrate as a chlorine neutralizer, and hence such a possibility is sufficiently conceivable in a test for evaluating moisture absorption resistance (test of exposing a small gas generator under environment of a temperature of 85°C × humidity of 85 % for 1000 hours) that the gas generator absorbs moisture after the test.

The present invention has been proposed in order to solve the aforementioned problems, and an object thereof is to provide a gas generant composition for a gas actuator for activating a safety device, superior in combustibility under a low pressure as compared with the conventional art and capable of reducing the amount of CO gas generated in combustion.

### MEANS FOR SOLVING THE PROBLEMS

The gas generant composition according to the present invention is employed for a gas actuator for activating a safety device. The gas actuator is a device converting the pressure of gas to power, and a device employed for activating a pretensioner or a hood lifter which is an automobile safety device can be listed, for example.

The gas generant composition for a gas actuator for activating a safety device according to the present invention contains the respective components of (A) a nitrogen-containing organic compound, (B) metal nitrate and/or perchlorate, (C) a water-soluble polymer binder, and (D) a magnetic material.

Preferably, (A) the nitrogen-containing organic compound is at least one substance selected from nitroguanidine, guanidine nitrate, bitetrazole, azobistetrazole and 5-aminotetrazole, (B) the metal nitrate is a metal salt selected from alkali metals and alkaline earth metals while the perchlorate is ammonium perchlorate or potassium perchlorate, and (C) the water-soluble polymer binder is a mixture of hydroxypropyl methylcellulose (HPMC) and polyacrylamide.

(D) The magnetic material in the gas generant composition according to the present invention has a property attracted to a magnet, and is preferably magnetic iron oxide, particularly preferably magnetic iron oxide (FeₓO·Fe₂O₃: where 0 ≤ x ≤ 1) having a spinel crystal structure. The magnetic iron oxide mentioned herein has magnetism and a redox catalytic function, dissimilarly to iron oxide (Fe₂O₃) generally employed as a catalyst.

Preferably, the gas generant composition according to the present invention further contains (E) a metal oxide other than the magnetic iron oxide, and more preferably, (E) the metal oxide other than the magnetic iron oxide is at least one substance selected from CuO, Cu₂O, ZnO, α-Fe₂O₃, Mn₂O₃ and Mn₃O₄.

Preferably in the gas generant composition according to the present invention, the content of (A) the nitrogen-containing organic compound is 25 to 55 weight %, the content of (B) the metal nitrate and/or the perchlorate is 40 to 70 weight %, the content of (C) the water-soluble polymer binder is 2 to 10 weight %, the content of (D) the magnetic iron oxide is 1 to 5 weight %, and the content of (E) the metal oxide other than the magnetic iron oxide is 1 to 5 weight %.

Preferably, (D) the magnetic iron oxide in the gas generant composition according to the present invention is a composition expressed in FeₓO·Fe₂O₃ (0 ≤ x ≤ 1), and is powder having a specific surface area of 2.5 to 80 m²/g.

Preferably, the gas generant composition according to the present invention is worked into a compact. This compact has a property attracted to a magnet.

Preferably, the gas generant composition according to the present invention is employed for a pretensioner or a hood lifter.

The present invention also provides a small gas generator for a gas actuator for activating a safety device employing the aforementioned gas generant composition according to the present invention. Preferably, this small gas generator is employed for a pretensioner or a hood lifter.

### EFFECTS OF THE INVENTION

The gas generant composition having magnetism according to the present invention contains the magnetic iron oxide, and hence has a catalytic effect of accelerating combustion under a low pressure, oxidizing CO gas generated in combustion to CO₂ and reducing the CO gas concentration due to combustion catalytic performance of this magnetic iron oxide powder. When the gas generant composition having magnetism as the compact is charged into the gas generator, the same can be charged to fill up the internal space due to magnetic force, whereby such particular effects are attained that both of the combustion accelerating effect under a low pressure and the effect of reducing the concentration of the CO gas generated in combustion are further increased.

### BRIEF DESCRIPTION OF THE DRAWINGS

Fig. 1 is a sectional view schematically showing a gas generator 1 of a pretensioner device in a case of employing a gas generant composition according to the present invention.
Fig. 2 illustrates sectional views schematically showing a process of assembling gas generator 1 shown in Fig. 1.
Fig. 3 is a sectional view schematically showing a gas generator for a pretensioner or a hood lifter.

### DESCRIPTION OF THE REFERENCE SIGNS

1 gas generator, 10 igniter, 20 holder, 30 combustion control cover, 40 AC cup, 50 gas generant, 150 dedicated filling jig.

### BEST MODES FOR CARRYING OUT THE INVENTION

The present invention provides a gas generant composition, containing respective components of (A) a nitrogen-containing organic compound, (B) metal nitrate and/or perchlorate, (C) a water-soluble polymer binder, and (D) a magnetic material. The respective components (A) to (D) contained in the gas generant composition according to the present invention are now described in detail.

### (A) Nitrogen-Containing Organic Compound

The nitrogen-containing organic compound contained in the gas generant composition according to the present invention can be widely employed for the present invention without particular limitation, so far as the same is an organic compound, other than nitric ester, containing nitrogen having been employed as a fuel for gas generation in this field. The nitrogen-containing organic compound has a structure basically suppressing generation of CO due to a high proportion of nitrogen atoms and a low proportion of carbon atoms in the molecular structure, and is easy in handling properties including thermal stability.

As a preferable example of the nitrogen-containing organic compound other than nitric ester, at least one substance selected from a triazole derivative, a tetrazole derivative, a guanidine derivative, an azodicarbonamide derivative and a hydrazine derivative can be listed, for example. More specifically, 5-oxo-1,2,4-triazole, tetrazole, 5-aminotetrazole, aminotetrazole nitrate, nitroaminotetrazole, bitetrazole (5,5'-bi-1H-tetrazole), 5,5'-bi-1H-tetrazole diammonium salt, azobistetrazole, 5,5'-azotetrazole diguanidium salt, guanidine, nitroguanidine, cyanoguanidine, triaminoguanidine nitrate, guanidine nitrate, aminoguanidine nitrate, biuret, azodicarbonamide, carbohydrazide, carbohydrazide nitrate complex, oxalic acid hydrazide, hydrazine nitrate complex, ammine complex and the like can be listed. Among these nitrogen-containing organic compounds, at least one substance selected from the tetrazole derivative and the guanidine derivative is preferable, and at least one substance selected from nitroguanidine, guanidine nitrate, bitetrazole, azobistetrazole and 5-aminotetrazole is particularly preferable, since the same is at a low cost, excellent in reactivity and relatively easy to handle.

The content (compounding ratio) of the nitrogen-containing organic compound in the gas generant composition according to the present invention is preferably 25 to 55 weight %, more preferably 30 to 50 weight %. If the content (compounding ratio) of the nitrogen-containing organic compound is less than 25 weight %, the number of moles of the generated gas per 100 g of the gas generant composition is reduced, and generation of NOₓ tends to increase due to excess oxygen. If the content (compounding ratio) of the nitrogen-containing organic compound exceeds 55 weight %, the true specific density of the gas generant composition decreases due to increase in the quantity of organic matter, the loading weight per volume decreases, and CO gas tends to generate in a large amount due to insufficiency of an oxidizer component.

### (B) Metal Nitrate and/or Perchlorate

The gas generant composition according to the present invention contains at least either metal nitrate or perchlorate as an oxidizer, and preferably contains both of metal nitrate and perchlorate.

While a metal salt selected from alkali metals, alkaline earth metals, iron, copper, magnesium, cobalt, nickel, zinc and the like, for example, can be listed as the metal nitrate employed in the present invention, a metal salt selected from alkali metals and alkaline earth metals is preferable, in view of reactivity and handleability. More specifically, at least one substance selected from sodium nitrate, potassium nitrate, magnesium nitrate, barium nitrate, strontium nitrate and the like is illustrated as such metal nitrate. In particular, potassium nitrate or strontium nitrate is preferable.

While at least one substance selected from ammonium perchlorate, potassium perchlorate, sodium perchlorate and the like, for example, can be listed as the perchlorate employed in the present invention, the perchlorate is not restricted to these. Among the above, ammonium perchlorate or potassium perchlorate generating a large amount of gas and having high reactivity is particularly preferable.

The content (compounding ratio) of metal nitrate and/or perchlorate in the gas generant composition according to the present invention is preferably 40 to 70 weight %, more preferably 45 to 65 weight %. This is because CO gas tends to generate in a large amount due to insufficient oxygen if the content (compounding ratio) of metal nitrate and/or perchlorate is less than 40 weight % while generation of NOₓ tends to increase due to excess oxygen if the content (compounding ratio) of metal nitrate and/or perchlorate exceeds 70 weight %. If the gas generant composition according to the present invention contains both of metal nitrate and perchlorate as the (B) component, the aforementioned content denotes the ratio at which the total quantity thereof occupies the gas generant composition.

### (C) Water-Soluble Polymer Binder

The gas generant composition according to the present invention contains a water-soluble polymer binder, in view of improving breaking strength and other mechanical properties (wear resistance, thermal form stability etc.). While a mixture of hydroxypropyl methylcellulose (HPMC) and polyacrylamide, cellulose acetate, sodium carboxylmethylcellulose, hydroxyethyl cellulose, hydroxypropyl methylcellulose, carboxymethylcellulose, guagum, polyvinyl alcohol, polyvinyl pyrolidone and the like, for example, can be listed as such water-soluble polymer binders, the water-soluble polymer binder is not restricted to these. In particular, the water-soluble polymer binder is preferably the mixture of HPMC and polyacrylamide, for the reason of extrudability and environmental resistance. While the mixing ratio of this mixture is not particularly limited, preferably HPMC:polyacrylamide = 8:1 to 2:1, more preferably HPMC:polyacrylamide = 5:1 to 3:1, due to excellent handleability in a kneaded state or an extruded state.

The content (compounding ratio) of the water-soluble polymer binder in the gas generant composition according to the present invention is preferably 2 to 10 weight %, more preferably 2 to 8 weight %. This is because the strength of a compact of the gas generant composition tends to lower if the content (compounding ratio) of the water-soluble polymer binder is less than 2 weight % while CO gas tends to generate in a large amount due to insufficient oxygen if the content (compounding ratio) of the water-soluble polymer binder exceeds 10 weight %.

### (D) Magnetic Material

While the magnetic material contained in the gas generant composition according to the present invention is not particularly limited, magnetic iron oxide is preferable, and magnetic iron oxide having a spinel crystal structure is particularly preferable. Magnetite (Fe₃O₄), maghemite (γ-Fe₂O₃), bertholide (FeₓO·Fe₂O₃) (0 ≤ x ≤ 1), ferrite (MO·Fe₂O₃) (M: bivalent metal) and the like, for example, can be listed as such magnetic iron oxide, and magnetite (Fe₃O₄) containing a large quantity of bivalent iron having a redox function is preferable in particular. It is possible to confirm that magnetite is contained in the gas generant composition by approximating a magnet and observing presence or absence of attraction, for example.

It is also preferable to employ bertholide which is an intermediate oxide expressed in FeₓO·Fe₂O₃ (0 ≤ x ≤ 1) as the magnetic iron oxide in the gas generant composition according to the present invention. This is because such an effect is attained that the redox action can be controlled by employing bertholide expressed in FeₓO·Fe₂O₃ (0 ≤ x ≤ 1).

When employing the magnetic iron oxide expressed in FeₓO·Fe₂O₃ (0 ≤ x ≤ 1), this magnetic iron oxide is preferably powder having a specific surface area 2.5 to 80 m²/g. It is unpreferable since chemical activity is low and both of the combustion effect and the CO gas concentration reducing effect are small if the specific surface area of the said magnetic iron oxide is less than 2.5 m²/g, while chemical activity is so excessively high that there is an apprehension that the magnetic iron oxide becomes unstable in the atmosphere and hard to handle if the specific surface area exceeds 80 m²/g. The said specific surface area is more preferably in the range of 10 to 60 m²/g, particularly preferably 20 to 50 m²/g. The specific surface area of the aforementioned magnetic iron oxide denotes a value measured by a BET method through nitrogen adsorption, for example.

The content (compounding ratio) of the magnetic iron oxide in the gas generant composition according to the present invention is preferably 1 to 5 weight %, more preferably 2 to 4 weight %. This is because the redox catalytic effect tends to lower if the content (compounding ratio) of the magnetic iron oxide is less than 1 weight % while the ratio of the gas generant component so lowers that the gas generation efficiency tends to lower if the content (compounding ratio) of the magnetic iron oxide exceeds 5 weight %.

The gas generant composition having magnetism according to the present invention containing the aforementioned components (A) to (D) preferably contains the magnetic iron oxide as the composition, whereby the same is excellent in combustibility under a low pressure, and can reduce the amount of CO gas generated in combustion. The gas generant composition according to the present invention having such effects can be preferably employed for a pretensioner or a hood lifter.

More specifically, the wording "excellent in combustibility under a low pressure" indicates that, while a combustion speed (5 % - 30 %) dP/dt which is a parameter indicating ignitability and combustibility under a low pressure (5 to 30 MPa) has been 0.1 to 0.3 in a conventional gas generant composition (specific example: nitroguanidine/strontium nitrate/ammonium perchlorate/binder), the combustion speed (5 % - 30 %) dP/dt under the same pressure is 1.8 to 5.9 in the gas generant composition according to the present invention. (5 % - 30 %) dP/dt mentioned herein denotes 5 % pressure (P5) at a time of setting the maximum ultimate pressure in a bomb to 100 %, and assuming that t5 represents a time from energization up to P5 and t30 similarly represents a time up to 30 % pressure (P30), the combustion speed (5 % - 30 %) dP/dt is expressed in (P30 - P5)/(t30 - t5) (combusting 1250 mg of the gas generant composition in a bomb of 27 cc with a hole of 3 mm in diameter and measuring the current internal pressure of the bomb with a pressure sensor).

Further, the wording "can reduce the amount of CO gas generated in combustion" more specifically indicates that, while the amount of CO gas generated by a conventional gas generant composition (specific example: smokeless powder mainly composed of nitrocellulose) in combustion has been 4000 to 5000 ppm, the amount of CO gas generated by the gas generant composition according to the present invention in combustion is 200 to 300 ppm (measuring gas generated by combusting 1000 mg of the gas generant composition in a bomb of 10 cc with a hole of 1 mm in diameter in a tank of 60 L with a gas detecting tube).

The gas generant composition according to the present invention is worked into a compact containing magnetic iron oxide to have magnetism, whereby such a particular effect is attained that chargeability can be improved by magnetic force when employed as a gas generant for a small gas generator used for a pretensioner or a hood lifter. This point is now described.

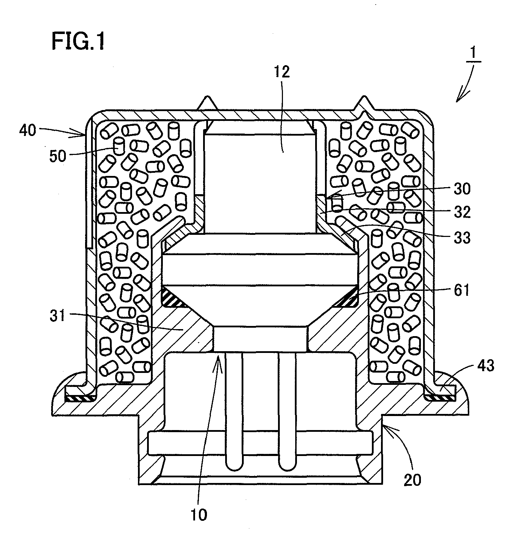

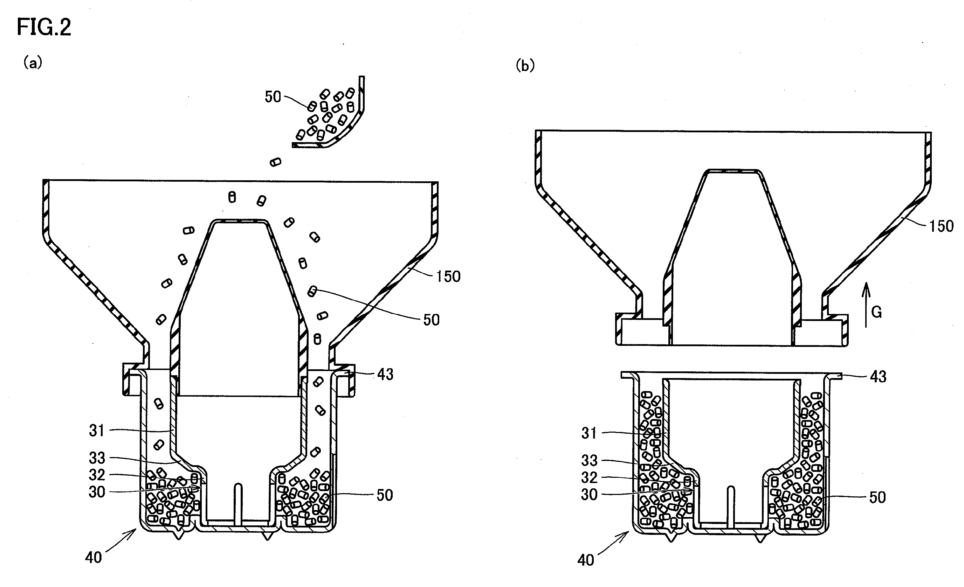

Fig. 1 is a sectional view schematically showing a small gas generator 1 for a pretensioner or a hood lifter in a case of employing the gas generant composition according to the present invention, and Fig. 2 illustrates sectional views schematically showing a process of assembling gas generator 1 shown in Fig. 1. Fig. 1 shows a case of employing gas generator 1 of a lateral blowing type, for example, as the small gas generator for a pretensioner or a hood lifter. As shown in Fig. 1, gas generator 1 mainly comprises an igniter 10, a holder 20 as a base substrate holding igniter 10, an actuating charge cup (AC cup) 40 as a cup member forming a gas generant storage chamber storing a gas generant (compact of a gas generant composition) 50 between the same and holder 20 holding igniter 10, and a combustion control cover 30 arranged in the aforementioned gas generant storage chamber and so provided as to cover holder 20 and igniter 10.

Combustion control cover 30 is formed by a hollow and substantially cylindrical member, and has a large-diametral portion 31 covering the upper portion of holder 20, a small-diametral portion 32 covering a squib cup 12 of igniter 10 and a tapered portion 33 coupling large-diametral portion 31 and small-diametral portion 32 with each other. Combustion control cover 30 performs a function of protecting squib cup 12 in non-operation, a function of preventing fragments resulting from rupture of squib cup 12 in operation from outward scattering and a function of supplying directivity to a flame formed in igniter 10 and laterally guiding the flame toward the gas generant storage chamber storing gas generant 50.

In the process of assembling gas generator 1, combustion control cover 30 is mounted on the inner part of AC cup 40 molded into a desired shape, and gas generant 50 is thereafter charged into a space formed between combustion control cover 30 and AC cup 40 with a dedicated filling jig 150 in general, as shown at (a) in Fig. 2. At this time, gas generant 50 is charged into the aforementioned space as densely as possible by vibrating AC cup 40 or the like. Then, dedicated filling jig 150 is detached from AC cup 40 by pulling up dedicated filling jig 150 toward a direction of arrow G in the drawing, as shown at (b) in Fig. 2. Thereafter holder 20 to which igniter 10 is caulked/fixed through an O-ring 61 is inserted into large-diametral portion 31 of combustion control cover 30 assembled into AC cup 40 charged with gas generant 50, and these are set on a stage (not shown) having a receiving surface on a lower portion. Then, the caulked portion of holder 20 is bent and plastic-deformed to roll in a flange portion 43 of AC cup 40, thereby caulking/fixing AC cup 40 to holder 20. Gas generator 1 having the structure shown in Fig. 1 is manufactured through this process.

However, such an assembling process has such restriction in manufacturing that positioning portions for dedicated filling jig 150 and combustion control cover 30 must be provided on the AC cup, and cannot be applied to that having no positioning portions on AC cup 40 as in the example shown in Fig. 1, for example. Further, there is a possibility that gas generant 50 charged into the gas generant storage chamber formed by igniter 10, holder 20 and AC cup 40 is unevenly distributed. If the gas generant is unevenly distributed in the aforementioned gas generant storage chamber, there is an apprehension that a uniform gas output cannot be obtained toward all directions of a working space, and there is also an apprehension that such an inconvenience takes place that a desired gas output cannot be obtained as the case may be. In a recent gas generator, not only a request for downsizing the device but also a requirement for increasing the gas output increases. In order to satisfy these conflicting requests, it is necessary to charge the gas generant into the gas generant storage chamber in high density. However, a gas generant molded by extrusion molding or the like is prepared in various shapes such as granular, pelletlike, columnar and discoidal shapes, and hence it is extremely difficult to densely charge the gas generant having such complicated shapes into the gas generant storage chamber.

According to the inventive gas generant composition, this composition is worked into a compact and contains magnetic iron oxide as the component (D), whereby dedicated filling jig 150 and combustion control cover 30 may not be employed when charging the aforementioned gas generant. In other words, the gas generator is manufactured by simply charging a constant quantity of the gas generant compact into AC cup 40, then applying a magnet from outside AC cup 40 thereby magnetizing the gas generant to the wall surface of AC cup 40 by magnetic force and providing a space in the central portion of AC cup 40 and thereafter inserting holder 20 having igniter 10 (igniter 10 inserted into large-diametral portion 31 of combustion control cover 30 if necessary) into the space. Thus, the steps from charging of the gas generant up to assembling of the gas generator can be simply carried out. Therefore, the gas generant can be charged up to a portion around an opening of AC cup 40 in high density as a result, and chargeability is improved as compared with a case of employing a gas generant composition containing no magnetic iron oxide. Consequently, it has been possible to further increase both of combustion efficiency and the CO gas reducing effect.

The gas generant composition according to the present invention preferably further contains a metal oxide other than magnetic iron oxide as the component (E), in view of further improving combustibility. While at least one substance selected from CuO, Cu₂O, ZnO, α-Fe₂O₃, Mn₂O₃, Mn₃O₄ and the like, for example, can be listed as this metal oxide other than magnetic iron oxide, the metal oxide is not restricted to these. In particular, the metal oxide is preferably at least one substance selected from CuO, Cu₂O and α-Fe₂O₃, due to an excellent combustion catalytic function.

When containing the aforementioned component (E), the content (compounding ratio) of this metal oxide other than magnetic iron oxide in the gas generant composition according to the present invention is preferably 1 to 5 weight %, more preferably 1 to 3 weight %. This is because the combustion catalytic effect tends to lower if the content (compounding ratio) of the aforementioned metal oxide is less than 1 weight % while the ratio of the gas generant component so lowers that the gas generation efficiency tends to lower if the content (compounding ratio) of the aforementioned metal oxide exceeds 5 weight %.

The gas generant composition according to the present invention may contain various additives (RDX (trimethylene trinitroamine), HMX (tetramethylene tetranitroamine), PETN (pentaerythritol tetranitrate), TAGN (triaminoguanidine nitrate), HN (hydrazine nitrate) etc.) in a range not hampering the effects of the present invention, as a matter of course.

The gas generant composition according to the present invention can be molded into a proper shape and provided as a gas generant. The shape of the compact is not particularly limited but a pelletlike, discoidal, spherical, barlike, hollow cylindrical, *confeito*-like or tetrapodic shape can be listed, and the compact may be imperforate or perforated. Further, the pelletlike or discoidal compact may be provided with about one to several protrusions on a single surface or both surfaces. The shape of the protrusions is not particularly limited, but a columnar, conical or multi-pyramidal shape, for example, can be listed.

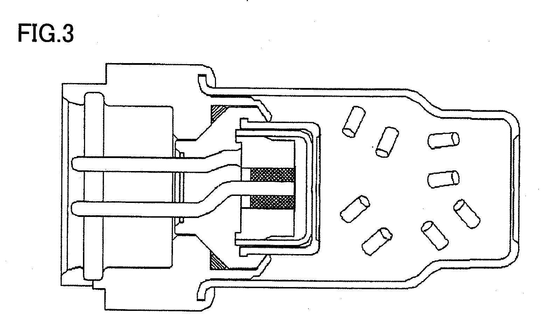

The present invention also provides a small gas generator for a gas actuator for activating a safety device employing the aforementioned gas generant composition according to the present invention. The small gas generator according to the present invention, not particularly limited so far as the same employs the gas generant composition according to the present invention, can be preferably implemented by that comprising pretensioner gas generator 1 shown in Fig. 1, or a small gas generator for a pretensioner or a hood lifter shown in Fig. 3, for example.

While the present invention is now described in more detail with reference to Examples and comparative examples, the present invention is not restricted to these.

Examples 1 to 4 and comparative examples 1 to 4 are shown below.

### <Example 1>

27.2 weight % of ammonium perchlorate, 27.2 weight % of strontium nitrate, 2.9 weight % of magnetic iron oxide (magnetite: Fe₃O₄) having an average particle diameter of 0.2 µm and a specific surface area of 20 m²/g, 4.6 weight % of hydroxypropyl methylcellulose and 1.2 weight % of polyacrylamide were mixed in a rocking mixer, and homogeneously kneaded in a kneader while adding 36.9 weight % of nitroguanidine and ion-exchanged water having an outer percentage of 14 weight %. Then, the said mixture was extruded in an extruder through a die of 1.5 mm in diameter with application of a prescribed pressure, to be extruded into a prescribed shape. The extruded compact of the gas generant composition was cut to a length of 2.0 mm, and dried to obtain a columnar gas generant composition.

A combustion speed (5 % - 30 %) dP/dt and CO concentration which are parameters showing ignitability and combustibility of the obtained gas generant composition were measured. As the method of measuring the combustion speed (5 % - 30 %) dP/dt, 1250 mg of the gas generant composition was combusted in a bomb of 27 cc with a hole of 3 mm in diameter for measuring the current internal pressure of the bomb with a pressure sensor and obtaining the relation between the combustion time and the combustion pressure. As to the CO concentration measurement, 1000 mg of the gas generant composition was combusted in a bomb of 10 cc with a hole of 1 mm in diameter in a tank of 60 L, and generated gas in 60 L was collected after 5 minutes from energization. The collected gas was measured with a Kitagawa gas detecting tube. As to the magnetism of the gas generant composition, a permanent magnet (coercive force Hc: 2.5 kOe to 4.0 kOe) was approximated, so that a denotes a case attracted to the magnet and b denotes a case not attracted thereto. Thus, presence or absence of improvement in chargeability by magnetic force can be determined.

Table 1 shows results as to Example 1.

**Table 1**

| composition of gas generant | weight % | (5%-30%)dP/dt combustion speed (MPa/ms) | CO concentration in gas generated in tank of 60 L (ppm) | attraction to attraction to magnet |
|---|---|---|---|---|
| nitroguanidine | 36.9 | 2.1 | 300 | a |
| ammonium perchlorate | 27.2 | | | |
| strontium nitrate | 27.2 | | | |
| magnetic iron oxide (Fe₃O₄) (specific surface area:20m²/g) | 2.9 | | | |
| hydroxypropyl methylcellulose | 4.6 | | | |
| polyacrylamide | 1.2 | | | |

### <Examples 2 to 4 and Comparative Examples 1 to 4>

Also in Examples 2 to 4 and comparative examples 1 to 3, gas generant compositions were manufactured by a method similar to that in Example 1, and the respective characteristics were evaluated by the same methods as Example 1. As to comparative example 4, commercially available smokeless powder was used and the characteristics were evaluated by the same methods as Example 1.

Table 2, Table 3 and Table 4 show results as to Example 2, Example 3 and Example 4 respectively. Further, Table 5, Table 6, Table 7 and Table 8 show results as to comparative example 1, comparative example 2, comparative example 3 and comparative example 4 respectively.

**Table 2**

| composition of gas generant | weight % | (5%-30%)dP/dt combustion speed (MPa/ms) | CO concentration in gas generated tank of 60 L (ppm) | attraction to magnet |
|---|---|---|---|---|
| nitroguanidine | 36.9 | 0.8 | 400 | a |
| ammonium perchlorate | 27.2 | | | |
| Strontium nitrate | 27.2 | | | |
| magnetic iron oxide (Fe₃O₄) (specific surface area:4m²/g) | 2.9 | | | |
| hydroxypropyl methylcellulose | 4.6 | | | |
| polyacrylamide | 1.2 | | | |

**Table 3**

| composition of gas generant | weight % | (5%-30%)dP/dt combustion speed (MPa/ms) | CO concentration in gas generated tank of 60 L (ppm) | attraction in to magnet |
|---|---|---|---|---|
| nitroguanidine | 36.2 | 5.9 | 300 | a |
| ammonium perchlorate | 26.7 | | | |
| strontium nitrate | 26.7 | | | |
| magnetic iron oxide (Fe₃O₄) (specific surface area:40m²/g) | 2.8 | | | |
| copper oxide (CuO) | 1.9 | | | |
| hydroxypropyl methylcellulose | 4.6 | | | |
| polyacrylam | 1.1 | | | |

**Table 4**

| composition of gas generant | weight % | (5%-30%)dP/dt combustion speed (MPa/ms) | CO concentration in gas generated tank of 60 L (ppm) | attraction in to magnet |
|---|---|---|---|---|
| nitroguanidine | 36.2 | 4.7 | 300 | a |
| ammonium perchlorate | 26.7 | | | |
| strontium nitrate | 26.7 | | | |
| magnetic iron oxide (Fe₃O₄) (specific surface area:20m²/g) | 2.8 | | | |
| copper oxide (CuO) | 1.9 | | | |
| hydroxypropyl methylcellulose | 4.6 | | | |
| polyacrylamide | 1.1 | | | |

**Table 5**

| composition of gas generant | weight % | (5%-30%)dP/dt combustion speed (MPa/ms) | CO concentration in gas generated in tank of 60 L (ppm) | attraction to magnet to magnet |
|---|---|---|---|---|
| nitroguanidine | 38.0 | 0.2 | 600 | b |
| ammonium perchlorate | 28.0 | | | |
| strontium nitrate | 28.0 | | | |
| hydroxypropyl methylcellulose | 4.8 | | | |
| polyacrylamide | 1.2 | | | |

**Table 6**

| composition of gas generant | weight % | (5%-30%)dP/dt combustion speed (MPa/ms) | CO concentration in gas generated in tank of 60 L (ppm) | attraction to magnet |
|---|---|---|---|---|
| nitroguanidine | 36.9 | 0.4 | 500 | b |
| ammonium perchlorate | 27.2 | | | |
| strontium nitrate | 27.2 | | | |
| Iron oxide (α-Fe₂O₃) | 2.9 | | | |
| hydroxypropyl methylcellulose | 4.6 | | | |
| polyacrylamide | 1.2 | | | |

**Table 7**

| composition of gas generant | weight % | (5%-30%)dP/dt combustion speed (MPa/ms) | CO concentration in gas generated in tank of 60 L (ppm) | attraction to magnet to magnet |
|---|---|---|---|---|
| nitroguanidine | 36.9 | 3.8 | 550 | b |
| ammonium perchlorate | 27.2 | | | |
| strontium nitrate | 27.2 | | | |
| copper oxide (CuO) | 2.9 | | | |
| hydroxypropyl methylcellulose | 4.6 | | | |
| polyacrylamide | 1.2 | | | |

**Table 8**

| composition of gas generant | weight % | (5%-30%)dP/dt combustion speed (MPa/ms) | CO concentration in gas generated in tank of 60 L (ppm) | attraction to magnet |
|---|---|---|---|---|
| smokeless powder | 100 | 6.5 | 4500 | b |

Examples 1 and 2 can be compared with comparative examples 1 and 2, and show that the combustion speed (5 % - 30 %) dP/dt can be increased and the amount of CO gas can be reduced by containing magnetic iron oxide. Examples 3 and 4 can be compared with comparative example 3, and show that copper oxide which is a metal oxide can increase the combustion speed (5 % - 30 %) dP/dt while CO gas exhibits a slightly high value of 550 ppm, and the combustion speed (5 % - 30 %) dP/dt can be further increased and the amount of CO gas can be reduced by further adding magnetic iron oxide. While comparative example 4, smokeless powder which is the conventional art, shows that a large amount of CO gas is generated although the combustion speed (5 % - 30 %) dP/dt is high. Examples 1 to 4 containing at least 1 weight % of magnetic iron oxide exhibited characteristics attracted to magnets as compared with comparative examples.

The embodiment, Examples and comparative examples disclosed this time must be considered as illustrative in all points and not restrictive. The range of the present invention is shown not by the above description but by the scope of claims for patent, and it is intended that all modifications within the meaning and range equivalent to the scope of claims for patent are included.

## Claims

1. A gas generant composition for a gas actuator for activating a safety device, containing the following components (A) to (D):
(A) a nitrogen-containing organic compound, (B) metal nitrate and/or perchlorate, (C) a water-soluble polymer binder, and (D) a magnetic material.

2. The gas generant composition according to claim 1, wherein
(D) the magnetic material is (D) magnetic iron oxide.

3. The gas generant composition according to claim 2, wherein
(A) the nitrogen-containing organic compound is at least one substance selected from nitroguanidine, guanidine nitrate, bitetrazole, azobistetrazole and 5-aminotetrazole, (B) the metal nitrate is a metal salt selected from alkali metals and alkaline earth metals while the perchlorate is ammonium perchlorate or potassium perchlorate, and (C) the water-soluble polymer binder is a mixture of hydroxypropyl methylcellulose and polyacrylamide.

4. The gas generant composition according to claim 2, wherein
(D) the magnetic iron oxide is magnetic iron oxide having a spinel crystal structure.

5. The gas generant composition according to claim 2, wherein
(D) the magnetic iron oxide is powder having a specific surface area of 2.5 to 80 m²/g.

6. The gas generant composition according to claim 2, further containing (E) a metal oxide other than the magnetic iron oxide.

7. The gas generant composition according to claim 6, wherein
(E) the metal oxide other than the magnetic iron oxide is at least one substance selected from CuO, Cu₂O, ZnO, α-Fe₂O₃, Mn₂O₃ and Mn₃O₄.

8. The gas generant composition according to claim 6, wherein
the content of (A) the nitrogen-containing organic compound is 25 to 55 weight %, the content of (B) the metal nitrate and/or the perchlorate is 40 to 70 weight %, the content of (C) the water-soluble polymer binder is 2 to 10 weight %, the content of (D) the magnetic iron oxide is 1 to 5 weight %, and the content of (E) the metal oxide other than the magnetic iron oxide is 1 to 5 weight %.

9. A compact of the gas generant composition according to claim 1.

10. The compact according to claim 9, having magnetism.

11. A small gas generator for a gas actuator for activating a safety device, using the gas generant composition according to claim 1 or the compact of the gas generant composition according to claim 9.
